**Europäisches Patentamt**

**European Patent Office**

**Office européen des brevets**

(19)

(11) Veröffentlichungsnummer: **0 370 235**

**A1**

(12) **EUROPÄISCHE PATENTANMELDUNG**

(21) Anmeldenummer: 89119503.4

(22) Anmeldetag: 20.10.89

(51) Int. Cl.5: **H01R 39/32, H02K 13/04**

(30) Priorität: 21.10.88 DE 3835818

(43) Veröffentlichungstag der Anmeldung:
**30.05.90 Patentblatt 90/22**

(84) Benannte Vertragsstaaten:
**CH DE ES FR GB IT LI SE**

(71) Anmelder: **STAPLA ULTRASCHALL-TECHNIK GMBH**
**Am Südpark 7C**
**D-6092 Kelsterbach(DE)**

(72) Erfinder: **Nuss, Lothar**
**Im Pfaffenweg 22**
**D-6050 Offenbach (Main)(DE)**

(74) Vertreter: **Oppermann, Ewald, Dipl.-Ing.**
**Am Wiesengrund 35**
**D-6050 Offenbach (Main)(DE)**

(54) **Verfahren und Vorrichtung zum Verbinden von Ankerwicklungsdrähten mit den Lamellen eines Hakenkollektors.**

(57) Bei einem Verfahren zur Herstellung einer elektrisch leitenden und mechanisch festen Verbindung von Ankerwicklungsdrähten mit den Lamellen eines Hakenkollektors, bei welchem die beim Wickelvorgang ohne Abisolieren um die Haken der Kollektorlamellen gelegten Drähte durch Umbiegen der Haken festgelegt und die freien Enden der Haken durch Ultraschallschweißen mit den jeweils zugehörigen Kollektorlamellen verbunden werden ist zur Verbesserung des elektrisch leitenden Kontaktes zwischen den Ankerwicklungsdrähten und den Kollektorlamellen vorgesehen, daß vor dem Umbiegen der Haken die Lackisolierschicht an den Stellen der Haken in einem ersten Verfahrensschritt thermisch und/oder mechanisch mindestens teilweise zerstört wird, worauf in einem zweiten Verfahrensschritt die Rückstände bzw. Reste der Lackisolierschicht bei dem unter Ultraschalleinwirkung erfolgenden Umbiegen der Haken von den für den Kontakt der Innenfläche der Haken bestimmten Drahtflächen durch die Ultraschallschwingungen mindestens teil weise entfernt werden, bevor in einem dritten Verfahrensschritt schließlich das Verschweißen der Hakenenden mit den Kollektorlamellen vorgenommen wird. Es werden auch unterschiedlich ausgestaltete Vorrichtungen zur Durchführung des Verfahrens vorgeschlagen.

Fig. 2

## Verfahren und Vorrichtung zum Verbinden von Ankerwicklungsdrähten mit den Lamellen eines Hakenkollektors

Die Erfindung bezieht sich auf ein Verfahren zur Herstellung einer elektrisch leitenden und mechanisch festen Verbindung von Ankerwicklungsdrähten mit den Lamellen eines Hakenkollektors, bei welchem die beim Wickelvorgang ohne Abisolieren um die Haken der Kollektorlamellen gelegten Drähte durch Umbiegen der Haken festgelegt und die freien Enden der Haken durch Ultraschallschweißen mit den jeweils zugehörigen Kollektorlamellen verbunden werden. Die Erfindung schließt auch zur Verfahrensdurchführung besonders geeignete Vorrichtungen mit einer relativ zum Hakenkollektor bewegbaren Sonotrode zum Umbiegen der Haken und Ultraschallschweißen der Hakenenden mit den Kollektorlamellen ein.

Die bereits vorgeschlagene Herstellung einer sowohl elektrisch leitenden als auch mechanisch festen Verbindung von Ankerwicklungsdrähten mit den Lamellen eines Kollektors durch Ultraschallschweißen (DE-OS 27 39 730, DE-OS 30 17 426) ist besonders wegen der damit erzielbaren thermisch schonenden Behandlung des Kollektors vorteilhaft, jedoch ist es mit den vorgeschlagenen Verfahren bisher nicht gelungen, reproduzierbare elektrische Verbindungen zwischen den Ankerwicklungsdrähten und den Kollektorlamellen herzustellen. Es hat sich vielmehr gezeigt, daß mit den bekannten Verfahren eine von Lamelle zu Lamelle gleichbleibend gute elektrische Verbindung nicht möglich ist, weil die Drahtisolierung oder Isolierungsreste zum Teil beträchtliche Übergangswiderstände ergeben und schlechtestenfalls eine elektrische Verbindung völlig ausschließen.

Bei einem der bekannten Verfahren (DE-OS 30 17 426) sollen die Kollektorlamellen auf einer Kontaktierungsfläche einer Sonotrode abgerollt werden und/oder umgekehrt, wodurch beim Schweißvorgang sowohl die Lackisolierung der Ankerwicklungsdrähte abplatzen und gleichzeitig eine mechanische Verbindung zwischen Haken und Lamellen durch Ultraschallschweißen entstehen soll. Das gewünschte Abplatzen der Lackisolierschicht erfolgt jedoch nicht gleichmäßig und/oder vollständig, so daß dieses Verfahren nicht zu reproduzierbaren elektrischen Verbindungen an den einzelnen Lamellen eines Kollektors führt, wodurch es wegen hoher Ausschußrate nicht für die Massenfertigung von Kollektoren geeignet ist.

Es wurde auch schon ein Verfahren vorgeschlagen (DE-OS 24 16 411), bei welchem zum Herstellen einer elektrisch leitenden und mechanischen Verbindung zwischen den Lamellen eines Hakenkommutators und Ankerwicklungsdrähten zunächst die Isolierung an den Drahtschlaufen entfernt wird, bevor sie um die Haken gelegt werden. Anschließend werden die Haken umgebogen und mit den Lamellenenden pressverschweißt. Die partielle Entfernung der Lackisolierung von den Drahtschlaufen vor deren Anbringung an den Haken ist jedoch ein aufwendiger Arbeitsschritt, der für jede Drahtschlaufe durchzuführen ist. Zur Vermeidung von Kurzschlüssen zwischen benachbarten abisolierten Drahtschlaufen sind hierbei die Lamellenenden abwechselnd in verschiedenen Ebenen angeordnet, was die Herstellung derartiger Kollektoren weiter verteuert.

Der vorliegenden Erfindung liegt die Aufgabe zugrunde, ein Verfahren bereitzustellen, mit dessen Hilfe an allen Lamellen eines Hakenkollektors gute elektrisch leitende Verbindungen mit den Ankerwicklungsdrähten erzielt werden, ohne daß zur Vermeidung von Kurzschlüssen die Lamellenenden in unterschiedlichen Ebenen anzuordnen sind.

Die gestellte Aufgabe wird ausgehend von der eingangs bezeichneten Gattung erfindungsgemäß durch ein Verfahren gelöst, welches dadurch gekennzeichnet ist, daß vor dem Biegen der Haken die Lackisolierschicht an den Stellen der Haken thermisch und/oder mechanisch mindestens teilweise zerstört wird, und daß die Rückstände bzw. Reste der Lackisolierschicht bei dem unter Ultraschalleinwirkung erfolgenden Umbiegen der Haken von den für den Kontakt mit der Innenfläche der Haken bestimmten Drahtflächen durch die Ultraschallschwingungen mindestens teilweise entfernt werden, bevor das Verschweißen der Hakenenden mit den Kollektorlamellen vorgenommen wird.

Durch die erfindungsgemäß vorgenommene thermische und/oder mechanische Zerstörung der Lackisolierschicht an die bereits um die Haken der Kollektorlamellen gelegten Drähte werden einerseits vorausgehende Abisolierschritte vermieden und andererseits wird die Abisolierung räumlich im wesentlichen auf die um die Haken gelegten Bereiche der Drähte beschränkt, so daß Kurzschlüsse zwischen benachbarten Drähten trotz Anordnung der Drahtschlaufen mit gleichen Radialabständen zur Kollektordrehachse ausgeschlossen sind. Die bei der thermischen und/oder mechanischen Zerstörung der Lackisolierschicht anfallenden Rückstände bzw. Reste der Lackisolierschicht werden beim Biegen unter Ultraschalleinwirkung aus dem Kontaktbereich verlagert bzw. entfernt, bevor die Haken vollständig umgebogen und an ihren Enden mit den Kollektorlamellen verschweißt werden. Auf diese Weise werden gleichbleibende metallische Kontaktflächen zwischen den Lamellen und Haken einerseits und den zugeordneten Drahtflächen erzielt.

Vorteilhaft wird das Verfahren so durchgeführt, daß die Rückstände bzw. Reste der Lackisolierschicht, soweit sie nicht vollständig entfernt werden, beim Umbiegen mittels der Ultraschallschwingungen in einen zwischen Draht, Hakeninnenfläche und Lamellenoberfläche gebildeten keilförmigen Raum verlagert werden. Damit ergeben sich definierte Zonen metallischen Kontakts zwischen den Drähten, der Hakeninnenfläche und der Lamellenoberfläche an jedem Haken.

Zweckmäßig wird das Verfahren so durchgeführt, daß zur mindestens teilweisen Zerstörung der Lackisolierschicht etwa in Längsrichtung des Kollektors durch die Abstände zwischen den Hakenenden und der Lamellenoberfläche hindurch thermisch und/oder mechanisch auf die Lackisolierschicht eingewirkt wird. Auf diese Weise können ausreichend große Flächenbereiche der Drähte zuverlässig von der Lackisolierschicht befreit werden.

Für die mindestens teilweise Zerstörung der Lackisolierschicht durch thermische Einwirkung stehen mehrere vorteilhafte Verfahrensvarianten zur Verfügung. So kann die Lackisolierschicht durch Kontaktieren eines hocherhitzten Körpers mit den Drähten mindestens teilweise beseitigt werden. Aber auch durch Abflammen oder Aufblasen hocherhitzter Luft auf die Drähte kommt es zu einem wirksamen Angriff auf die Lackisolierschicht. Auch ein Abbrennen der Lackisolierschicht mittels eines Laserstrahls kommt in Betracht. Schließlich ist es auch möglich, alle Drähte eines Kollektors an den Stellen der Haken gleichzeitig direkt induktiv zu erhitzen, wodurch die Lackisolierschicht an allen Haken gleichzeitig angegriffen wird.

Auch für die auf mechanischem Wege herbeigeführte mindestens teilweise Zerstörung der Lackisolierschicht stehen verschiedene Verfahrensmöglichkeiten zur Verfügung. So kann die Lackisolierschicht zusätzlich zu den beschriebenen thermischen Verfahren oder auch ausschließlich durch Abbürsten der Drähte an den gewünschten Stellen entfernt werden. Das Verfahren kann aber auch so geführt werden, daß der Angriff auf die Lackisolierschicht zusätzlich zu den beschriebenen thermischen Verfahren oder ausschließlich durch Abstrahlen der Drähte mit feinen Feststoffpartikeln erfolgt. Es versteht sich, daß bei zusätzlicher Anwendung mechanischer Verfahren diese zweckmäßig den thermischen Verfahren nachfolgend zur Einwirkung gebracht werden.

Bei einer Reihe der möglichen thermischen oder mechanischen Verfahrensvarianten ist es von Vorteil, wenn zur mindestens teilweisen Zerstörung der Lackisolierschicht die Einwirkung auf die Drähte unter Relativrotation zwischen den thermisch und/oder mechanisch einwirkenden Mitteln und dem Hakenkollektor um die Achse des Hakenkollektors erfolgt.

Entsprechend der Anzahl der vorstehend erläuterten Verfahrensvarianten werden auch mehrere unterschiedlich ausgebildete erfindungsgemäße Vorrichtungen zur Durchführung des Verfahrens vorgeschlagen. Soll die mindestens teilweise Zerstörung der Lackisolierschicht durch Kontaktieren eines glühenden Körpers mit den Drähten vorgenommen worden, so ist die Vorrichtung vorteilhaft so ausgebildet, daß ein induktiv oder elektrisch beheizbarer Ring konzentrisch zum Hakenkollektor und mit radialem Abstand dazu angeordnet ist, der an einem parallel zur Achse des Hakenkollektors verschiebbar geführten Halter befestigt ist.

Wenn dagegen die Lackisolierschicht durch Abflammen, Aufblasen hocherhitzter Luft oder durch einen Laserstrahl angegriffen werden soll, ist die Anordnung der Vorrichtung vorteilhaft so getroffen, daß am Umfang des Kollektors und mit Abstand dazu mindestens eine Brenner- oder Heißluftdüse bzw. ein Laserkopf angeordnet ist, deren bzw. dessen Strahlrichtung mit der Kollektorachse einen spitzen Winkel bildet und die um die Haken gelegten Drähte trifft.

Für die mechanische Zerstörung der Lackisolierschicht durch Abbürsten der Drähte ist die Vorrichtung vorteilhaft so ausgebildet, daß konzentrisch zum Hakenkollektor und mit radialem Abstand dazu ein umfänglich mit Stahlborsten od. dgl. besetzter Ring angeordnet ist, der an einem um die Achse des Hakenkollektors rotierbaren und parallel dazu verschiebbaren Halter befestigt ist.

Die Vorrichtungsausgestaltung für die Zerstörung der Lackisolierschicht durch Abstrahlen der Drähte mit feinen Feststoffpartikeln ist vorteilhaft dadurch gekennzeichnet, daß am Umfang des Kollektors und mit Abstand dazu mindestens eine Strahldüse zum Ausstoßen von feinen Feststoffteilchen mit hoher Geschwindigkeit angeordnet ist, deren Strahlrichtung mit der Kollektorachse einen spitzen Winkel bildet und die um die Haken gelegten Drähte trifft.

Wenn die Drähte an den betreffenden Stellen gleichzeitig direkt induktiv erhitzt werden sollen, sieht eine vorteilhafte Vorrichtungsvariante vor, daß eine Induktionsspule konzentrisch zum Hakenkollektor und mit radialem Abstand zu den Haken vorgesehen ist, wobei die Induktionsspule und der Hakenkollektor relativ zueinander axial verlagerbar angeordnet sind. Die axiale Verlagerbarkeit ermöglicht eine Relativverschiebung zwischen der Induktionsspule und dem Hakenkollektor, damit nach dem direkten induktiven Erhitzen der Drahtschlaufen die Haken für den Angriff der Sonotrode freigelegt sind.

Weitere Einzelheiten und Merkmale des erfindungsgemäßen Verfahrens und der zu seiner Durchführung vorgeschlagenen Vorrichtungen werden nachfolgend in Ausführungsbeispielen anhand der schematisch dargestellten Zeichnungen näher erläutert. In den Zeichnungen zeigt:

Fig. 1 die abgebrochen dargestellte Seitenansicht eines Hakenkollektors,

Fig. 2 den abgebrochen dargestellten Schnitt durch eine Kollektorlamelle entsprechend der Linie II - II in Fig. 1,

Fig. 3 einen der Fig. 2 ähnlichen Schnitt durch eine Kollektorlamelle und eine Vorrichtung zum Kontaktieren eines glühenden Körpers mit den Drähten,

Fig. 4 einen weiteren abgebrochen dargestellten Längsschnitt durch eine Kollektorlamelle mit einer Vorrichtung zum Abflammen oder Aufblasen hocherhitzter Luft,

Fig. 5 einen abgebrochenen Längsschnitt durch eine Kollektorlamelle mit einer Laserstrahlvorrichtung,

Fig. 6 einen abgebrochenen Längsschnitt durch eine Kollektorlamelle mit einer Induktionsspule,

Fig. 7 einen abgebrochenen Längsschnitt durch eine Kollektorlamelle mit einer Vorrichtung zum Abbürsten der Drähte,

Fig. 8 einen abgebrochenen Längsschnitt durch eine Kollektorlamelle mit einer Vorrichtung zum Abstrahlen der Drähte mit feinen Feststoffpartikeln,

Fig. 9 u. 10 jeweils einen abgebrochenen Längsschnitt durch eine Kollektorlamelle mit gegenüberstehender Sonotrode in zwei unterschiedlichen Ausführungsformen und

Fig. 11 eine Perspektivansicht eines Ankers mit Kollektor und einer dem Kollektor gegenüberstehenden rotierbaren Sonotrode.

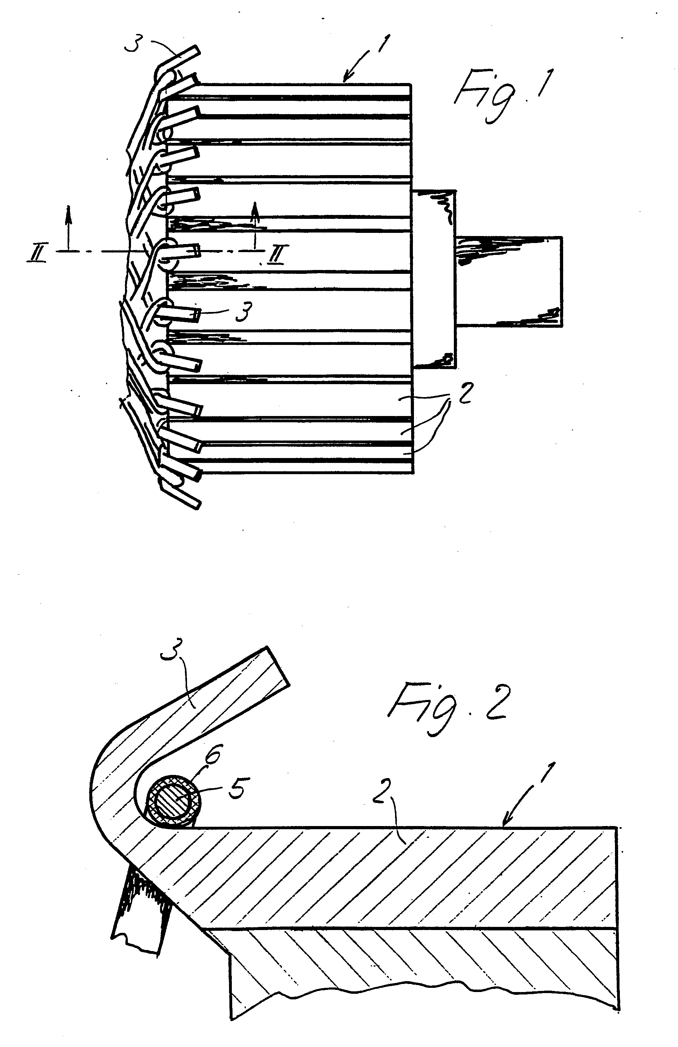

Der in Fig. 1 dargestellte Kollektor 1 weist eine Vielzahl von mit gleichen Abständen in seiner Zylinderumfangsfläche befindlichen Lamellen 2 auf, an deren einem Ende jeweils ein Haken 3 angeformt ist. Die Haken 3 befinden sich zunächst übereinstimmend in einer aufgebogenen Stellung, wie sie in den Fig. 1 bis 9 dargestellt ist. Die aufgebogene Stellung ermöglicht beim Wickeln des nur in Fig. 11 angedeuteten Ankers 4 das Umschlingen der Haken 3 mit den Ankerwicklungsdrähten 5.

Bevor die Haken 3 in Richtung der Oberfläche der Lamellen 2 unter Ultraschalleinwirkung auf noch zu beschreibende Weise umgebogen werden, wird in einem ersten Verfahrensschritt die auf den Ankerwicklungsdrähten 5 befindliche Lackisolierschicht 6 an den Stellen der Haken 3 thermisch und/oder mechanisch mindestens teilweise zerstört. Hierbei erfolgt die Einwirkung auf die Lackisolierschicht etwa in Längsrichtung des Kollektors 1 durch die Abstände hindurch, die sich zwischen den Enden der Haken 3 und den Oberflächen der Lamellen 2 befinden. Zunächst werden die thermischen Verfahren anhand der entsprechende Vorrichtungen darstellenden Figuren näher beschrieben.

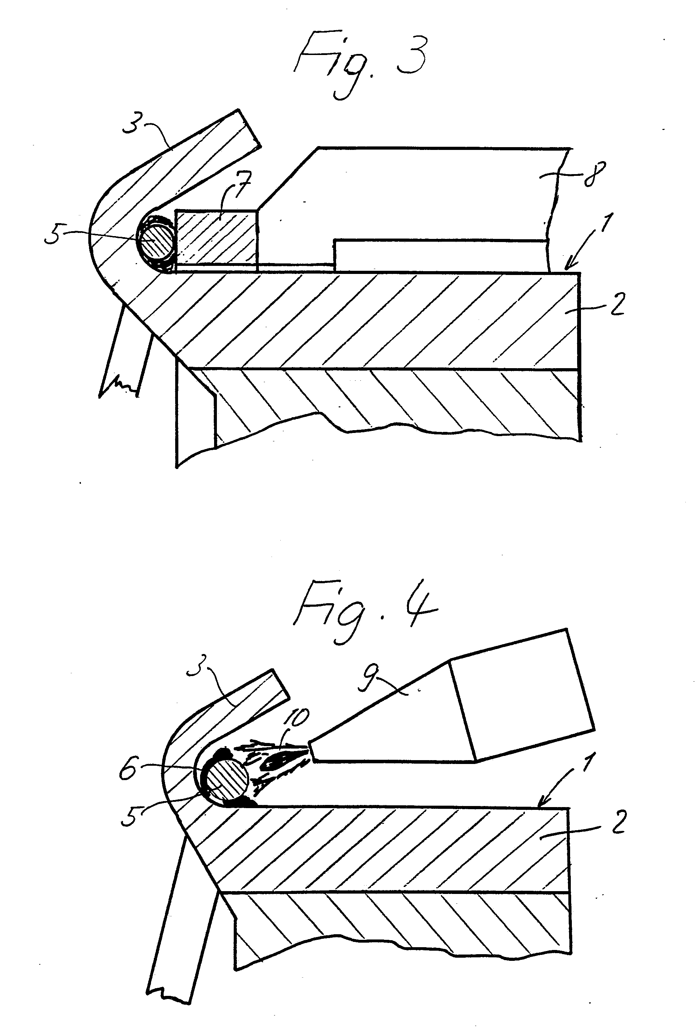

Bei der in Fig. 3 gezeigten Vorrichtung ist konzentrisch zum Kollektor 1 und mit radialem einen Spalt zur Kollektorumfangsfläche bildenden Abstand ein Ring 7 angeordnet, der an einem parallel zur Achse des Kollektors 1 verschiebbar geführten Halter 8 befestigt ist. Der Ring 7 kann auf induktivem Wege z. B. bis zur Rotglut beheizt werden. Wird der derart aufgeheizte Ring 7 in Kontakt mit den in die Haken 3 eingelegten Ankerwicklungsdrähten 5 gebracht, wie das in Fig. 3 angedeutet ist, so wird die Lackisolierschicht 6 an den Stellen des Kontakts und in unmittelbarer Nachbarschaft dazu thermisch so beschädigt, daß sie sich in diesem Bereich von den Drähten löst. Hierbei erfolgt die thermische Einwirkung gleichzeitig für alle Haken 3 bzw. die in den Haken eingelegten Ankerwicklungsdrähte 5. Gleichzeitig zum Kontaktieren des Ringes 7 mit den Drähten kann eine Relativrotation zwischen dem Kollektor 1 und dem Ring 7 vorgesehen sein, wodurch gleichzeitig auch mechanisch abkratzend auf die Lackisolierschicht an den fraglichen Stellen eingewirkt wird.

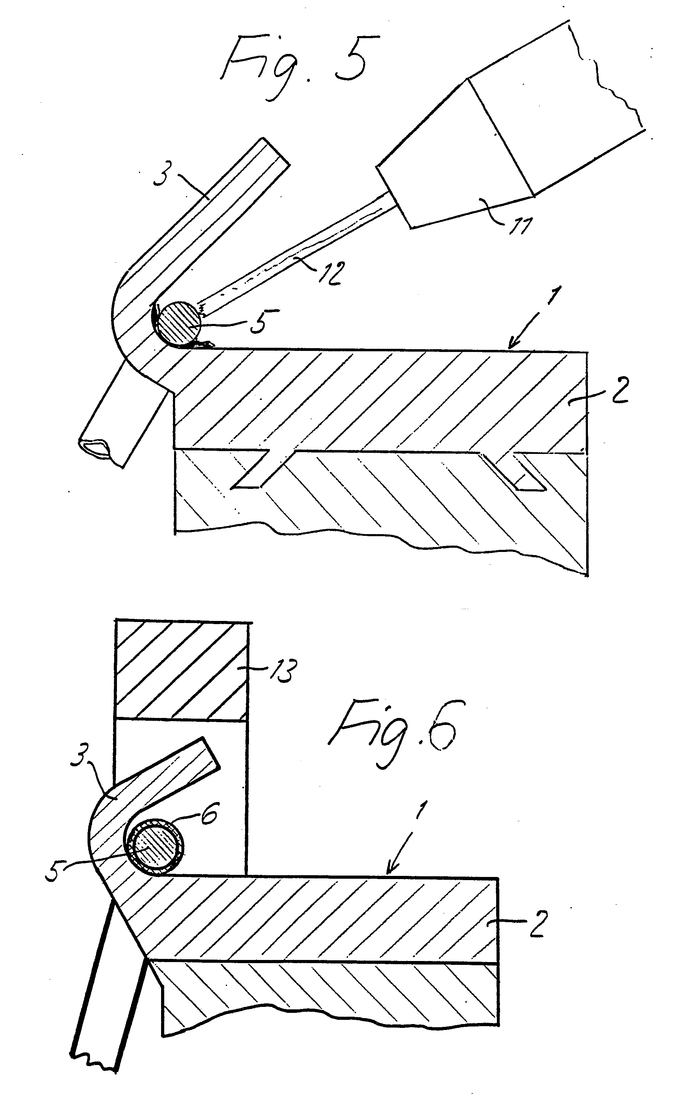

Bei der in Fig. 4 dargestellten Vorrichtung ist am Umfang des Kollektors 1 und mit Abstand dazu mindestens eine Brenner- oder Heißluftdüse 9 ortsfest angeordnet, aus der eine Flamme 10 oder aber hocherhitzte Luft zum Austritt gebracht werden kann, welche die Lackisolierschicht 6 innerhalb der Haken 3 von den Ankerwicklungsdrähten 5 entfernt. Hierbei rotiert der Kollektor 1 um seine Achse, um alle in den Haken 3 befindlichen Drähte mit der Flamme 10 bzw. der Heißluft gleichmäßig in Berührung zu bringen.

Aus Fig. 5 geht eine ähnliche Vorrichtung hervor, bei welcher jedoch anstelle einer Brenner- oder Heißluftdüse ein Laserkopf 11 angeordnet ist, aus welchem ein auf die in die Haken 3 eingelegten Ankerwicklungsdrähte 5 gerichteter Laserstrahl 12 austritt. Auch in diesem Fall ist der Laserkopf 11 ortsfest angeordnet, während der Kollektor 1 zur Rotation um seine Achse vorgesehen ist.

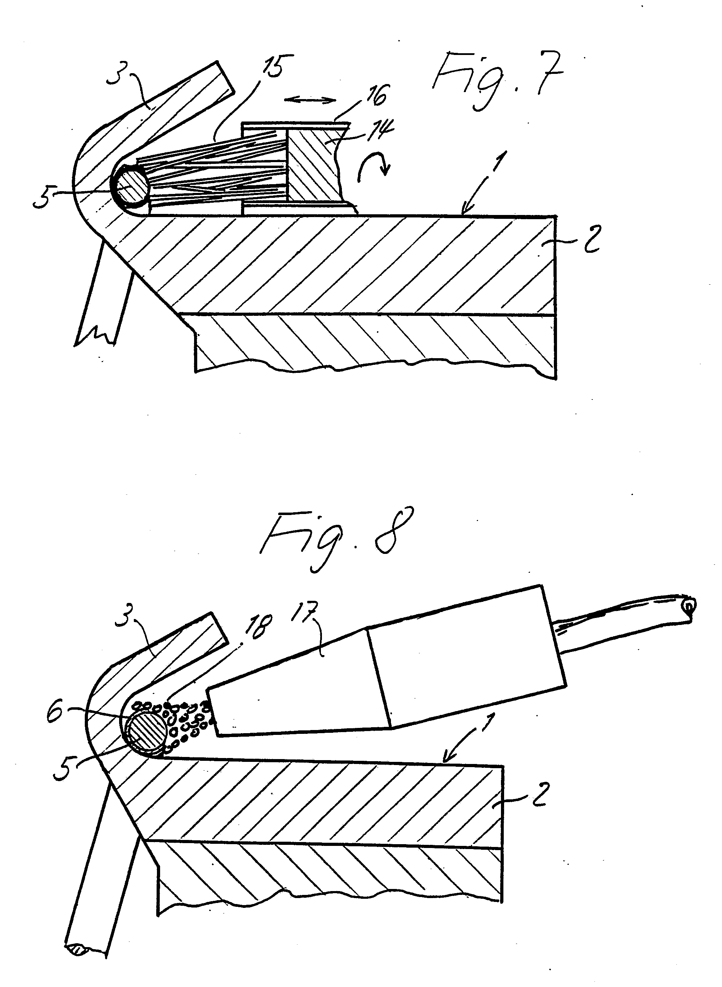

Bei der in Fig. 6 gezeigten Vorrichtung ist konzentrisch zum Kollektor 1 eine Induktionsspule 13 vorgesehen, die allseits einen radialen Abstand zu den Haken 3 aufweist, d.h. diese nicht berührt. Eine Relativrotation muß in diesem Fall zwischen Induktionsspule 13 und Kollektor 1 nicht vorgesehen werden, jedoch müssen die Induktionsspule 13 und der Kollektor 1 in axialer Richtung relativ zueinander verlagerbar angeordnet sein, damit nach der Induktionserhitzung der in den Haken 3 befindlichen Ankerwicklungsdrähte 5 die Haken 3 zum Sonotrodenangriff freigelegt werden können. Bei der Induktionserhitzung der Ankerwicklungsdrähte, die vornehmlich im Bereich der Haken 3 erfolgt, wird die Lackisolierschicht 6 thermisch so geschädigt, daß bei den nachfolgenden Arbeitsgängen ein metallischer Kontakt zwischen den Hakenlamellen und den Drähten herbeigeführt werden kann.

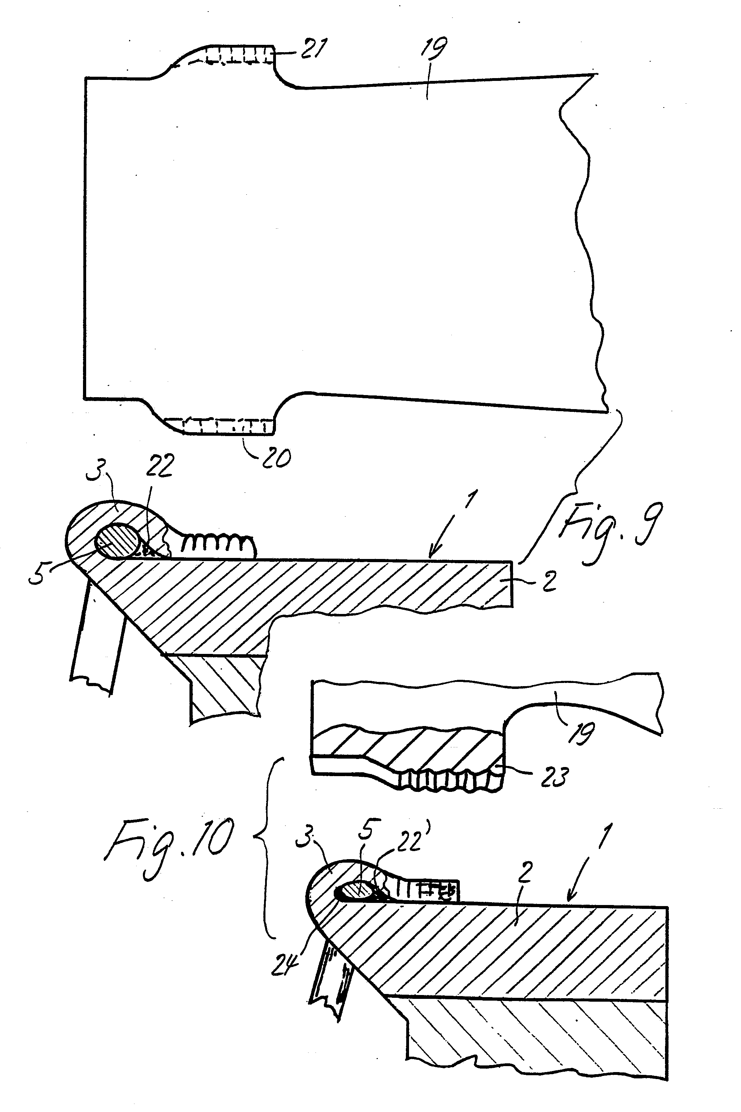

Wird der erste Verfahrensschritt der mindestens teilweise Zerstörung der in die Haken 3 eingelegten Ankerwicklungsdrähte 5 mechanisch durchgeführt oder soll zusätzlich zu einer vorausgegangenen thermischen Einwirkung auf die Ankerwicklungsdrähte 5 zur Zerstörung der Lackisolierschicht auch noch mechanisch eingewirkt werden, so läßt sich das mit Hilfe der in den Fig. 7 und 8 dargestellten Vorrichtungen durchführen. Gemäß Fig. 7 ist konzentrisch zum Kollektor 1 und mit radialem Abstand dazu ein Ring 14 vorgesehen, der an seinem Umfang mit Stahlborsten 15 od. dgl. besetzt ist. Der Ring 14 und der Kollektor 1 sind relativ zueinander axial verlagerbar und außerdem kann zwischen dem Ring 14 und dem Kollektor 1 eine Relativrotation herbeigeführt werden, um den Abbürstvorgang durchzuführen. Der Ring 14 ist an einem Halter 16 befestigt.

Die in Fig. 8 gezeigte Vorrichtung ähnelt denjenigen, die mit Bezug auf die Fig. 4 und 5 beschrieben worden sind. Eine Strahldüse 17 ist so am Umfang des Kollektors 1 und mit Abstand dazu angeordnet, daß der aus ihr austretende Strahl von feinen Feststoffteilchen 18 auf die um die Haken 3 gelegten Drähte 5 auftrifft. Die Vorrichtung ist so ausgestaltet, daß eine Relativrotation zwischen der Strahldüse 17 und dem Kollektor 1 möglich ist. Wenn die Strahldüse 17 ortsfest angeordnet ist, ist für eine Drehbarkeit des Kollektors 1 um seine Achse zu sorgen. Es können auch mehrere Strahldüsen 17 am Umfang des Kollektors 1 verteilt vorgesehen sein.

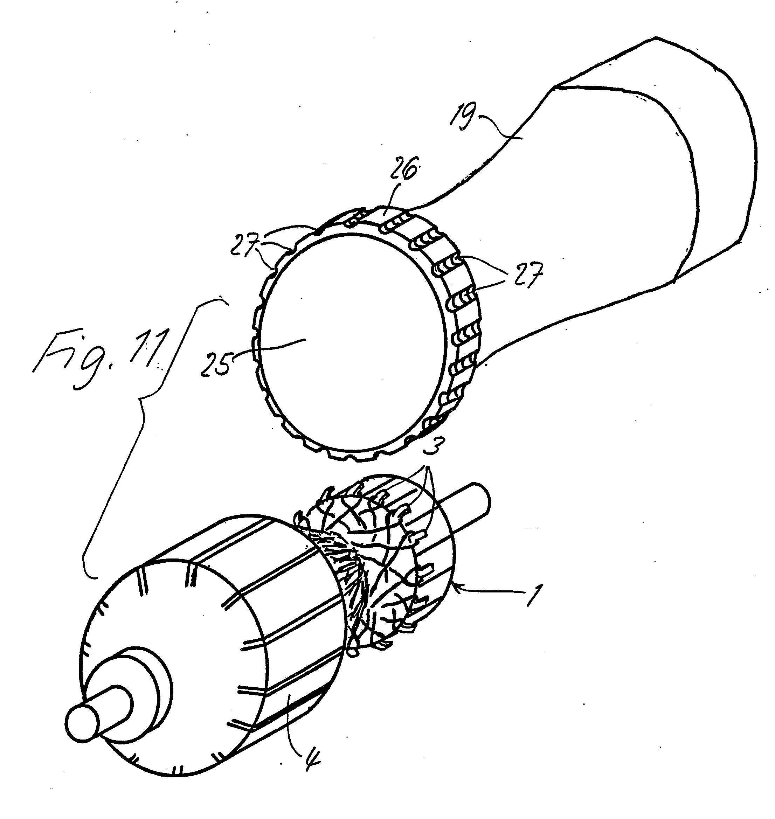

Ist in dem beschriebenen ersten Verfahrensschritt die Lackisolierschicht 6 auf den Ankerwicklungsdrähten 5 an ihren Einlegestellen in die Haken 3 mindestens teilweise thermisch und/oder mechanisch zerstört worden, erfolgt an dem Kollektor 1 nacheinander das Umbiegen der Haken 3 unter gleichzeitiger Ultraschalleinwirkung als zweiter Verfahrensschritt. Zu diesem Zweck wird die Sonotrode einer Ultraschallschweißvorrichtung als Biegewerkzeug verwendet. Zur Erläuterung dieses Vorgangs wird zunächst auf die Fig. 9 und 10 Bezug genommen.

In Fig. 9 ist eine Sonotrode 19 dargestellt, an der sich beispielsweise zwei unterschiedlich gestaltete Vorsprünge 20 und 21 befinden, die für die Umbiegungsform der Haken 3 verantwortlich sind. Sofort mit dem Aufsetzen eines der Vorsprünge 20 oder 21 auf den noch aufgebogenen Haken 3 werden die Ultraschallschwingung der Sonotrode 19 auf den Haken 3 übertragen und mit zunehmender Abbiegung auch auf den im Haken 3 liegenden Ankerwicklungsdraht 5. Dabei werden die Rückstände bzw. Reste der thermisch und/oder mechanisch mindestens teilweise zerstörten Lackisolierschicht durch die hochfrequenten Schwingungen von den für den elektrischen Kontakt vorgesehenen Flächen des Ankerwicklungsdrahts 5 entfernt und in einen keilförmigen Raum 22 verlagert, der beim Biegevorgang zwischen dem Draht 5, der Innenfläche des Hakens 3 und der Oberfläche der Lamelle 2 gebildet ist. Der Biegevorgang ist dann im wesentlichen abgeschlossen, wenn der Haken 3 mit seinem Hakenende auf die Oberfläche der Kollektorlamelle 2 auftrifft.

Bei fortgesetzter Druckeinwirkung des Vorsprungs 20 bzw. 21 der Sonotrode 19 auf den Haken 3 wird dieser unter Ultraschallverschweißung des Hakenendes mit der Oberfläche der Lamelle 2 schließlich in die in Fig. 9 gezeigte endgültige Form gebracht. Wie ersichtlich ist, wird der durch den Anpreßdruck ebenfalls etwas verformte Ankerwicklungsdraht 5 über einen erheblichen Umfangsbereich von dem Haken 3 zur Bildung eines zuverlässigen elektrischen Kontakts umschlungen. Der zweite Verfahrensschritt des Umbiegens des Hakens 3 unter Ultraschalleinwirkung und der dritte Verfahrensschritt des Verschweißens des Hakenendes mit der Kollektorlamelle 2 folgen sich zeitlich überlappend unmittelbar aufeinander.

In Fig. 10 ist dargestellt, daß durch entsprechende Anordnung und Gestaltung eines Vorsprungs 23 der Sonotrode 19 beim Biege- und Schweißvorgang zusätzlich zum keilförmigen Raum 22' noch ein weiterer Spaltraum 24 zwischen dem Draht 5, der Innenfläche des Hakens 3 und der Oberfläche der Lamelle 2 gebildet werden kann, in welchen ebenfalls beim Biegen Rückstände bzw. Reste der Lackisolierschicht verlagert werden. Auch in diesem Fall entsteht ein sicherer metallischer Kontakt zwischen der Lamelle und dem Haken 3 einerseits und dem Ankerwicklungsdraht 5 andererseits.

Bei der in Fig. 11 gezeigten Anordnung ist die um ihre Achse drehbare Sonotrode 19 mit einem zylindrischen Sonotrodenkopf 25 versehen, deren Umfangsfläche 26 zum Abwälzen auf der zylindrischen Umfangsfläche des Kollektors 1 bestimmt ist. In der Umfangsfläche 26 befinden sich in regelmäßigen Abständen Vertiefungen 27, welche den Haken 3 des Kollektors 1 so zugeordnet sind, daß beim Abwälzen die Haken 3 unter Durchführung des beschriebenen Biege- und Schweißvorgangs Aufnahme in den Vertiefungen 27 finden.

**Ansprüche**

1. Verfahren zur Herstellung einer elektrisch leitenden und mechanisch festen Verbindung von Ankerwicklungsdrähten mit den Lamellen eines Hakenkollektors, bei welchem die beim Wickelvorgang ohne Abisolieren um die Haken der Kollektorlamellen gelegten Drähte durch Umbiegen der Haken festgelegt und die freien Enden der Haken durch Ultraschallschweißen mit den jeweils zugehörigen Kollektorlamellen verbunden werden, dadurch gekennzeichnet, daß vor dem Umbiegen der Haken die Lackisolierschicht an den Stellen der Haken thermisch und/oder mechanisch mindestens teilweise zerstört wird, daß die Rückstände bzw. Reste der Lackisolierschicht bei dem unter Ultraschalleinwirkung erfolgenden Umbiegen der Haken von den für den Kontakt mit der Innenfläche der Haken bestimmten Drahtflächen durch die Ultraschallschwingungen mindestens teilweise entfernt werden, bevor das Verschweißen der Hakenenden mit den Kollektorlamellen vorgenommen wird.

2. Verfahren nach Anspruch 1, dadurch gekennzeichnet, daß die Rückstände bzw. Reste der Lackisolierschicht, soweit sie nicht vollständig entfernt werden, beim Umbiegen mittels der Ultraschallschwingungen in einen zwischen Draht, Hakeninnenfläche und Lamellenoberfläche gebildeten keilförmigen Raum verlagert werden.

3. Verfahren nach Anspruch 1 oder 2, dadurch gekennzeichnet, daß zur mindestens teilweisen Zerstörung der Lackisolierschicht etwa in Längsrichtung des Kollektors durch die Abstände zwischen den Hakenenden und der Lamellenoberfläche hindurch thermisch und/oder mechanisch auf die Lackisolierschicht eingewirkt wird.

4. Verfahren nach einem der Ansprüche 1 bis 3, dadurch gekennzeichnet, daß die mindestens teilweise Zerstörung der Lackisolierschicht durch Kontaktieren eines hocherhitzten Körpers mit den Drähten vorgenommen wird.

5. Verfahren nach einem der Ansprüche 1 bis 3, dadurch gekennzeichnet, daß die mindestens teilweise Zerstörung der Lackisolierschicht durch Abflammen oder Aufblasen hocherhitzter Luft auf die Drähte vorgenommen wird.

6. Verfahren nach einem der Ansprüche 1 bis 3, dadurch gekennzeichnet, daß die mindestens teilweise Zerstörung der Lackisolierschicht durch Abbrennen mittels eines Laserstrahls vorgenommen wird.

7. Verfahren nach Anspruch 1 oder 2, dadurch gekennzeichnet, daß zur mindestens teilweisen Zerstörung der Lackisolierschicht alle Drähte an den Stellen der Haken gleichzeitig direkt induktiv erhitzt werden.

8. Verfahren nach einem der Ansprüche 1 bis 7, dadurch gekennzeichnet, daß die mindestens teilweise Zerstörung der Lackisolierschicht zusätzlich oder ausschließlich durch Abbürsten der Drähte vorgenommen wird.

9. Verfahren nach einem der Ansprüche 1 bis 7, dadurch gekennzeichnet, daß die mindestens teilweise Zerstörung der Lackisolierschicht zusätzlich oder ausschließlich durch Abstrahlen der Drähte mit feinen Feststoffpartikeln vorge nommen wird.

10. Verfahren nach einem der Ansprüche 1 bis 6, 8 und 9, dadurch gekennzeichnet, daß zur mindestens teilweisen Zerstörung der Lackisolierschicht die Einwirkung auf die Drähte unter Relativrotation zwischen den thermisch und/oder mechanisch einwirkenden Mitteln und dem Hakenkollektor um die Achse des Hakenkollektors erfolgt.

11. Vorrichtung zur Durchführung des Verfahrens nach den Ansprüchen 1 bis 4 mit einer relativ zum Hakenkollektor (1) bewegbaren Sonotrode (19) zum Umbiegen der Haken (3) und Ultraschallschweißen der Hakenenden mit den Kollektorlamellen (2), dadurch gekennzeichnet, daß ein induktiv oder elektrisch beheizbarer Ring (7) konzentrisch zum Hakenkollektor (1) und mit radialem Abstand dazu angeordnet ist, der an einem parallel zur Achse des Hakenkollektors verschiebbar geführten Halter (8) befestigt ist.

12. Vorrichtung zur Durchführung des Verfahrens nach einem der Ansprüche 1 bis 3, 5, 6 und 10, mit einer relativ zum Hakenkollektor (1) bewegbaren Sonotrode (19) zum Umbiegen der Haken (3) und Ultraschallschweißen der Hakenenden mit den Kollektorlamellen (2) ,dadurch gekennzeichnet, daß am Umfang des Kollektors (1) und mit Abstand dazu mindestens eine Brenner- oder Heißluftdüse (9) oder ein Laserkopf (11) angeordnet ist, deren bzw. dessen Strahlrichtung mit der Kollektorachse einen spitzen Winkel bildet und die um die Haken gelegten Drähte trifft.

13. Vorrichtung zur Durchführung des Verfahrens nach einem der Ansprüche 1 bis 8 und 10, mit einer relativ zum Hakenkollektor (1) bewegbaren Sonotrode (19) zum Umbiegen der Haken (3) und Ultraschallschweißen der Hakenenden mit den Kollektorlamellen (2), dadurch gekennzeichnet, daß konzentrisch zum Hakenkollektor (1) und mit radialem Abstand dazu ein umfänglich mit Stahlborsten (15) od. dgl. besetzter Ring (14) angeordnet ist, der an einem um die Achse des Hakenkollektors (1) rotierbaren und parallel dazu verschiebbaren Halter (16) befestigt ist.

14. Vorrichtung zur Durchführung des Verfahrens nach einem der Ansprüche 1 bis 7, 9 und 10, mit einer relativ zum Hakenkollektor (1) bewegbaren Sonotrode (19) zum Umbiegen der Haken (3) und Ultraschallschweißen der Hakenenden mit den Kollektorlamellen (2), dadurch gekennzeichnet, daß am Umfang des Kollektors (1) und mit Abstand dazu mindestens eine Strahldüse (17) zum Ausstoßen von feinen Feststoffteilchen (18) mit hoher Geschwindigkeit angeordnet ist, deren Strahlrichtung mit der Kollektorachse einen spitzen Winkel bildet und die um die Haken (3) gelegten Drähte (5) trifft.

15. Vorrichtung zur Durchführung des Verfahrens nach einem der Ansprüche 1 , 2 und 7 bis 9, mit einer relativ zum Hakenkollektor (1) bewegbaren Sonotrode (19) zum Umbiegen der Haken (3) und Ultraschallschweißen der Hakenenden mit den Kollektorlamellen (2), dadurch gekennzeichnet, daß eine Induktionsspule (13) konzentrisch zum Hakenkollektor (1) und mit radialem Abstand zu den Haken (3) vorgesehen ist, wobei die Induktionsspule (13) und der Hakenkollektor (1) relativ zueinander axial verlagerbar angeordnet sind.

Fig. 1

Fig. 2

Fig. 3

Fig. 4

Fig. 5

Fig.6

Fig. 7

Fig. 8

Fig. 9

Fig. 10

Fig. 11

Europäisches Patentamt

**EUROPÄISCHER RECHERCHENBERICHT**

Nummer der Anmeldung

EP 89 11 9503

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 437 744 (SCHUNK ULTRASCHALLTECHNIK GMBH) * Seite 3, Zeilen 25-41; Seite 6, Zeile 24 - Seite 7, Zeile 6 * | 1 | H 01 R 39/32 H 02 K 13/04 |
| A | DE-A-2 511 102 (FORD-WERKE AG) * Anspruch 1 * | 1 | |
| A | FR-A-2 591 042 (LICENTIA PATENT-VERWALTUNGS-GMBH) * Seite 1, Zeile 17 - Seite 2, Zeile 13; Seite 2, Zeilen 20-26; Figuren 1-4 * | 1 | |
| A | EP-A-0 280 386 (JOHNSON ELECTRIC INDUSTRIAL MANUFACTORY LTD.) * Anspruch 1; Spalte 3, Zeilen 36-39 * | 1 | |
| D,A | DE-A-3 017 426 (NIEBUHR MICROSCHWEISSTECHNIK GMBH) * Anspruch 1; Seite 10, Absatz 2 - Seite 11, Absatz 1 * | 1 | |
| D,A | DE-A-2 416 411 (AKTIEBOLAGET ELECTROLUX) * Seite 3, Absatz 1 * | 1 | |
| D,A | DE-A-2 739 730 (LUCAS INDUSTRIES LTD.) * Anspruch 1 * | 1 | |
| A | US-A-3 421 212 (E.W. CHABOT) * Zusammenfassung * | 1 | |

**RECHERCHIERTE SACHGEBIETE (Int. Cl.5)**

H 01 R 39/00
H 01 R 43/00
H 02 K 13/00
H 02 G 1/00

Der vorliegende Recherchenbericht wurde für alle Patentansprüche erstellt

| Recherchenort | Abschlußdatum der Recherche | Prüfer |
|---|---|---|
| BERLIN | 24-01-1990 | CLOSA D. |